# EUROPEAN PATENT SPECIFICATION

(11) **EP 3 771 230 B1**
(45) Date of publication and mention of the grant of the patent: **06.11.2024**
(21) Application number: 20184958.5
(22) Date of filing: 09.07.2020
(51) Int. Cl.: H04W 4/02, H04W 4/021, H04W 4/44

(54) **AREA INFORMATION PROVIDING SYSTEM, AREA INFORMATION SERVER, AND MOVABLE-OBJECT-MOUNTED DEVICE**
BEREICHSINFORMATIONSBEREITSTELLUNGSSYSTEM, BEREICHSINFORMATIONSSERVER UND AN EINEM BEWEGLICHEN OBJEKT MONTIERTE VORRICHTUNG
SYSTÈME DE FOURNITURE D'INFORMATIONS DE ZONE, SERVEUR D'INFORMATIONS DE ZONE ET DISPOSITIF MONTÉ SUR UN OBJET MOBILE

(30) Priority: 23.07.2019 JP 2019135402
(43) Date of publication of application: 27.01.2021
(73) Proprietor: Micware Co., Ltd., Kobe-shi, Hyogo 650-0035 (JP)
(72) Inventor: ITO, Makoto, Kobe-shi, Hyogo 650-0044 (JP)
(74) Representative: Vossius & Partner Patentanwälte Rechtsanwälte mbB

(56) References cited:
- JP-A- 2015 025 718
- US-A1- 2016 105 773

## Description

### FIELD OF INVENTION

The present invention relates to an area information providing system, an area information server, and a movable-object-mounted device that provide area information to a movable object through wireless communication.

### Background Art

A known weather information providing system may connect a weather information server for providing information about weather and an in-vehicle device mounted on a vehicle through wireless communication and provide information about weather from the weather information server to the in-vehicle device for each mesh zone (refer to, for example, Patent Literature 1).

The weather information providing system described in Patent Literature 1 includes a weather information server that transmits weather information about an area in the traveling direction of a vehicle to its in-vehicle device. The in-vehicle device can display the weather information received from the weather information server on a display. Patent Literature 2 relates to a rainfall information providing system that provides rainfall information at a moving destination of a moving body, and a rainfall information transmitting device used in the rainfall information providing system.

### CITATION LIST

### PATENT LITERATURE

Patent Literature 1: Japanese Unexamined Patent Application Publication No. 2018-109820
Patent Literature 2: JP2015025718A

### SUMMARY OF INVENTION

However, the known weather information providing system involves transmission of a relatively large volume of data between a communication device incorporated in the in-vehicle device and the weather information server, and the vehicle incorporates a communication device that can transmit a large volume of data at high speed.

The above issue also occurs when data is transmitted between the communication device mounted on a movable object and an area information server for providing information about an area, in addition to when data is transmitted between the communication device mounted on a movable object and the weather information server. Examples of the area information include weather information and disaster information. Examples of the disaster information include flood information and tsunami information. The invention is defined in the independent claim, the dependent claims concern preferred embodiments.

The invention is defined by the system of claim 1. Preferred embodiments are defined by the dependent claims.

The system according to the above aspects of the present invention allow useful area information to be provided to a user with a small volume of data transmitted between the communication device mounted on a movable object and the area information server.

### BRIEF DESCRIPTION OF THE DRAWINGS

Fig. 1 is a diagram showing the flow of information in a weather information providing system according to an embodiment.
Fig. 2 is a block diagram of a movable-object-mounted device according to the embodiment, showing its example structure.
Fig. 3 is a diagram of an example movable-object-mounted device according to the embodiment.

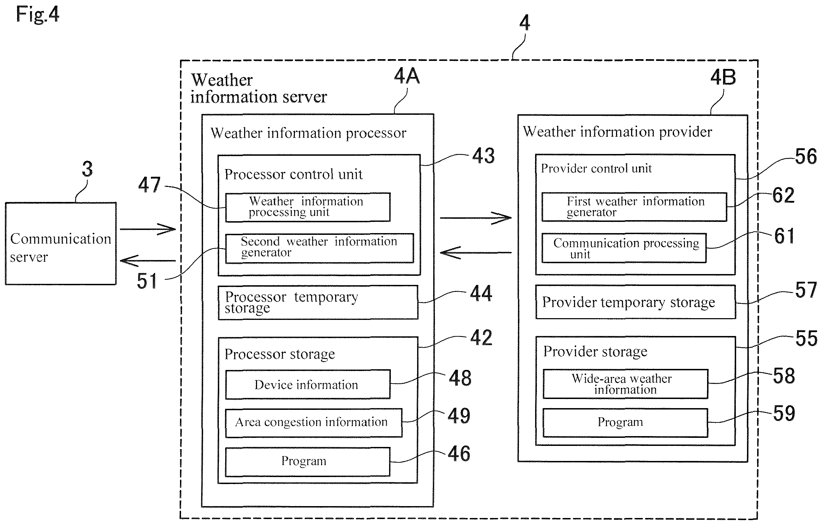

Fig. 4 is a block diagram of a weather information processor and a weather information provider, showing their example structures.
Fig. 5 is a schematic diagram of a mesh zone associated with wide-area weather information and a mesh zone associated with first weather information.
Fig. 6 is a flowchart showing the procedure of processing information in the weather information providing system according to the embodiment.

### DETAILED DESCRIPTION

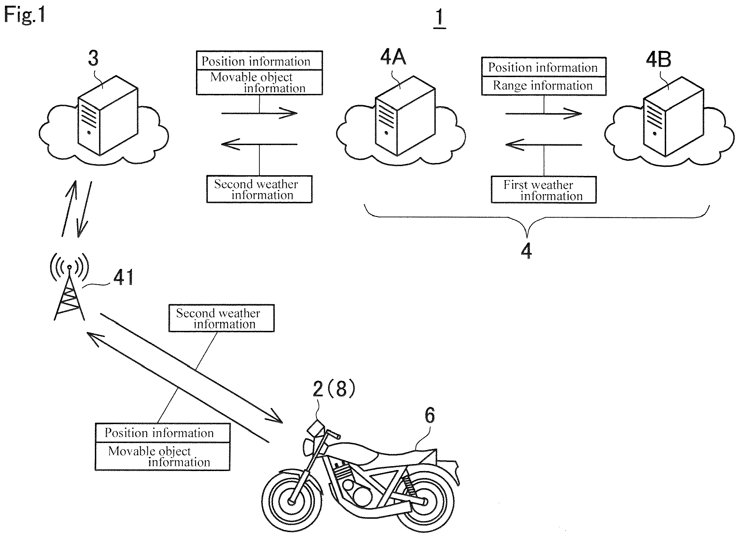

An area information providing system according to an embodiment of the present information will now be described. In the present embodiment, a weather information providing system for providing information about weather to a user as area information will be described with reference to the drawings. As shown in Fig. 1, the weather information providing system 1 according to the present embodiment includes a movable-object-mounted device 2, a communication server 3, and a weather information server 4. In Fig. 1, the arrows indicate the flow of information.

As shown in Fig. 1, the movable-object-mounted device 2 is mounted on a movable object 6. In the present embodiment, the movable object 6 is a motorcycle. However, the movable object 6 is not limited to a motorcycle. For example, the movable object 6 may be an automobile. The movable object 6 may be a ship or a snow vehicle. Examples of a ship include a personal watercraft and a boat. Examples of a snow vehicle include a snowmobile. The movable object 6 may broadly include a person.

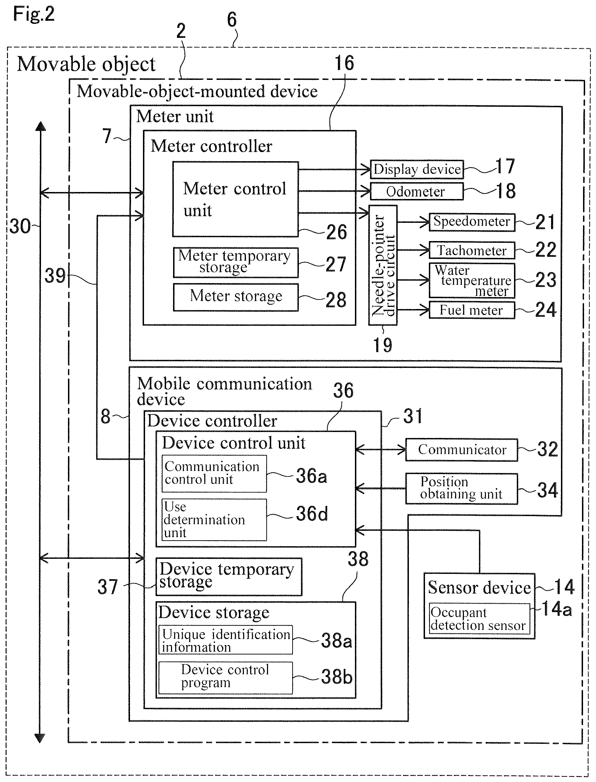

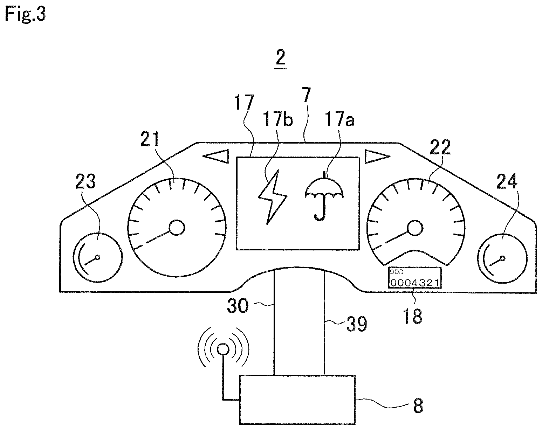

As shown in Figs. 2 and 3, the movable-object-mounted device 2 includes a meter unit 7, a mobile communication device 8, and a sensor device 14.

As shown in Fig. 2, the meter unit 7 includes a meter controller 16, a display device 17, an odometer 18, a needle-pointer drive circuit 19, a speedometer 21, a tachometer 22, a water temperature meter 23, and a fuel meter 24.

The meter controller 16 includes a meter control unit 26, a meter temporary storage 27, and a meter storage 28. The meter controller 16 is connected to an in-vehicle local area network (LAN) 30. The in-vehicle LAN 30 may use the Controller Area Network (CAN).

The meter control unit 26 may be a central processing unit (CPU). The meter control unit 26 executes a meter control program stored in the meter storage 28 to control the display on the display device 17 and the odometer 18. The meter control unit 26 executes the meter control program stored in the meter storage 28 to control the display on the speedometer 21, the tachometer 22, the water temperature meter 23, and the fuel meter 24 through the needle-pointer drive circuit 19.

The meter temporary storage 27 temporarily stores information to be processed by the meter control unit 26. The meter temporary storage 27 may be a volatile memory. Examples of a volatile memory include a random-access memory (RAM).

The meter storage 28 stores programs including the meter control program and data to be displayed on the display device 17. The data to be displayed includes weather display data. The weather display data includes rainfall display data for indicating rainfall and lightning display data for indicating lightning. The rainfall display data allows, for example, the display device 17 to display an umbrella symbol 17a. The lightning display data allows, for example, the display device 17 to display a lightning symbol 17b. The meter storage 28 may be a non-volatile memory. Examples of a non-volatile memory include a read-only memory (ROM) and a flash memory.

The display device 17 may be a liquid crystal display or an organic electro luminescent (EL) display. The display device 17 may be a touch panel.

The needle-pointer drive circuit 19 receives readings for the meters from the meter control unit 26, and drives motors for rotating the needles of the speedometer 21, the tachometer 22, the water temperature meter 23, and the fuel meter 24.

The mobile communication device 8 is connected to the meter unit 7 with an in-vehicle LAN cable and a low voltage differential signaling (LVDS) cable. The mobile communication device 8 includes a device controller 31, a communicator 32, and a position obtaining unit 34. The communicator 32 may be a communicator for a low-power wide-area (LPWA) communication standard.

The position obtaining unit 34 obtains position information about the movable object 6. The position obtaining unit 34 provides the obtained position information about the movable object 6 to the device control unit 36. The position obtaining unit 34 may be a global positioning system (GPS) sensor for a satellite navigation system. Position information includes latitude information, longitude information, and the time at which the position information is obtained.

The position obtaining unit 34 may also be a Wi-Fi communication module instead of a GPS sensor. The Wi-Fi communication module accesses an access point to obtain the identification information about the access point as the position information about the movable object 6. In other words, the location of an access point for Wi-Fi communication may be used as the position of the movable object 6.

The device controller 31 includes a device control unit 36, a device temporary storage 37, and a device storage 38. The device controller 31 may be a computer including a CPU, a ROM, and a RAM. The device controller 31 is connected to the in-vehicle LAN 30. The device controller 31 communicates with the meter controller 16 through the in-vehicle LAN 30. The device controller 31 transmits image data to the meter controller 16 through LVDS 39.

The device control unit 36 may be a CPU. The device control unit 36 executes a device control program 38b stored in the device storage 38 to control each unit included in the mobile communication device 8. The device control unit 36 functions as, for example, a communication control unit 36a and a use determination unit 36d. The communication control unit 36a controls the communicator 32. The communication control unit 36a causes the communicator 32 to transmit transmission information to the communication server 3. The communication control unit 36a causes the communicator 32 to receive information transmitted from the communication server 3.

The use determination unit 36d determines whether the movable object 6 is in use. The use determination unit 36d determines whether the movable object 6 is in use based on, for example, information detectable when the movable object 6 carries a person. The use determination unit 36d may determine that the movable object 6 is not in use when, for example, the ignition power source is off. The use determination unit 36d may determine that the movable object 6 is not in use when, for example, the movable object 6 has no seat being occupied. The use determination unit 36d may determine whether the movable object 6 has an occupied seat based on, for example, a signal from an occupant detection sensor 14a.

The device temporary storage 37 temporarily stores information to be processed by the device control unit 36. The device temporary storage 37 may be a volatile memory. Examples of a volatile memory include a RAM.

The device storage 38 stores various programs including the device control program 38b and unique identification information 38a about the mobile communication device 8. The device storage 38 may be a non-volatile memory. Examples of a non-volatile memory include a ROM and a flash memory.

The communicator 32 communicates with the communication server 3 via a base station 41. The communicator 32 transmits transmission information including position information about the position of the movable object 6 and movable object information about the movable object 6 to the communication server 3. The movable object information includes the unique identification information 38a. The communicator 32 can communicate with the communication server 3 up to a predetermined number of times per day in a predetermined communication volume or less per time. The communicator 32 communicates with the base station 41, which serves as a gateway for the communication server 3, for example, through LPWA communication. LPWA communication transmits a small volume of data per time, and has a limited number of times of transmission per day. However, LPWA communication enables low-power-consumption communication across a relatively wide area. The communicator 32 using LPWA communication can transmit radio waves across a wide area having a radius ranging, for example, from a few to several tens of kilometers. The communicator 32 using LPWA communication achieves a communication speed ranging, for example, from 100 bps to several tens of kbps. The communicator 32 using LPWA communication enables communication using, for example, the 920 MHz band or the 2.4 GHz band. In the present embodiment, when the use determination unit 36d determines that the movable object 6 is in use, the communication control unit 36a causes the communicator 32 to transmit transmission information at first time intervals. When the use determination unit 36d determines that the movable object 6 is not in use, the communication control unit 36a causes the communicator 32 to transmit transmission information to the communication server 3 at second time intervals. The first time intervals are shorter than the second time intervals. The first time intervals may be intervals of 10 minutes. The second time intervals may be intervals of three hours.

The sensor device 14 obtains sensor information about the movable object 6. The sensor device 14 provides the obtained sensor information about the movable object 6 to the device control unit 36. Examples of the sensor device 14 include the occupant detection sensor 14a and an internal measurement unit (IMU). The sensor device 14 may detect the traveling speed of the movable object 6. Although the sensor device 14 is installed outside the mobile communication device 8, the sensor device 14 may be installed inside the mobile communication device 8. The sensor device 14 may provide the obtained sensor information about the movable object 6 to the device control unit 36 through the in-vehicle LAN 30. The occupant detection sensor 14a may be a pressure sensor.

The communication server 3 transmits and receives information to and from the mobile communication device 8 through wireless communication. In the present embodiment, the communication server 3 is connected to the base station 41 for LPWA communication through a dedicated high-speed communication line or a computer network. The communication server 3 receives information transmitted from the communicator 32 via the base station 41. The communication server 3 transmits information to the communicator 32 via the base station 41. The communication server 3 may be a computer including a CPU, a ROM, and a RAM. The communication server 3 may execute a communication control program stored in the RAM to function as a back-end server that connects LPWA communication to the Internet. The weather information server 4 is located on the Internet.

The weather information server 4 transmits and receives information to and from the mobile communication device 8 through the communication server 3. The weather information server 4 generates first weather information corresponding to a predetermined range based on the position information received from the mobile communication device 8 through the communication server 3. The weather information server 4 generates second weather information based on the generated first weather information and the movable object information about the movable object 6. The weather information server 4 transmits the generated second weather information to the mobile communication device 8 through the communication server 3. The first weather information may be weather information associated with a plurality of mesh zones within a predetermined range. The second weather information may include rainfall information indicating rainfall and lightning information indicating lightning. The second weather information is weather information without location information indicating a location. More specifically, the rainfall information does not include location information indicating a location at which rain is falling. The lightning information does not include location information indicating a location at which lightning has struck. The second weather information may thus have a smaller data size than the first weather information.

In the present embodiment, the weather information server 4 includes a weather information processor 4A and a weather information provider 4B.

The weather information processor 4A includes a processor storage 42, a processor control unit 43, and a processor temporary storage 44. The weather information processor 4A may be a computer including a CPU, a ROM, and a RAM.

The processor storage 42 stores device information 48, area congestion information 49, and a processing control program 46. The device information 48 includes movable object information about the movable object 6. The movable object information includes, for example, the motor displacement or rated output of the movable object 6. The movable object information is associated with the identification information about the mobile communication device 8. For the movable object 6 that is, for example, a motorcycle, the motor displacement or rated output may fall into three classes, namely, the first class, the second class, and the third class. The first class corresponds to, for example, the motor displacement or rated output of a motorcycle with its speed legally restricted to 30 km/h under the Japanese law. The second class corresponds to, for example, the motor displacement or rated output of a motorcycle prohibited from entering expressways although its speed is not legally restricted to 30 km/h under the Japanese law. The third class corresponds to, for example, the motor displacement or rated output of a motorcycle permitted to enter expressways under the Japanese law.

The area congestion information 49 is road congestion level information for each area on a map. The road congestion level information may be set to one of the congestion level 0, the congestion level 1, and the congestion level 2. The road congestion level information indicates the level of road congestion that is higher in the order of the congestion level 2, the congestion level 1, and the congestion level 0. The area congestion information 49 is preset information and not automatically updated. The area congestion information 49 may be automatically updated regularly.

The processor control unit 43 executes the processing control program 46 stored in the processor storage 42 to control each unit included in the weather information processor 4A. The processor control unit 43 functions as, for example, a weather information processing unit 47 and a second weather information generator 51.

The weather information processing unit 47 receives transmission information including the position information and the movable object information about the movable object 6 from the mobile communication device 8 through the communication server 3. The weather information processing unit 47 reads, from the received transmission information, the identification information about the mobile communication device 8 included in the movable object information. The weather information processing unit 47 reads, from the device information 48, the motor displacement or rated output of the movable object 6 stored in a manner associated with the read identification information.

The weather information processing unit 47 calculates the traveling speed of the movable object 6 based on, for example, the received position information about the movable object 6.

The weather information processing unit 47 reads the road congestion level information about the current position of the movable object 6 based on the position information about the movable object 6 and the area congestion information 49.

The weather information processing unit 47 determines the range of weather information to request from the weather information provider 4B based on, for example, the motor displacement or rated output of the movable object 6, the calculated traveling speed of the movable object 6, and the road congestion level information at the current position of the movable object 6. The weather information processing unit 47 transmits range information to the weather information provider 4B to request weather information corresponding to the determined range. The range of weather information to request from the weather information provider 4B by the weather information processing unit 47 expands as the motor displacement or rated output of the movable object 6 increases. The range of weather information to request from the weather information provider 4B by the weather information processing unit 47 expands as the traveling speed of the movable object 6 increases. The range of weather information to request from the weather information provider 4B by the weather information processing unit 47 expands as the degree of congestion indicated by the congestion level information decreases at the current position of the movable object 6.

The second weather information generator 51 generates second weather information based on first weather information generated in the weather information provider 4B. The second weather information generator 51 may also generate second weather information based on first weather information generated in the weather information provider 4B and the movable object information about the movable object 6. The movable object information may be received from the mobile communication device 8 in the movable object 6. The movable object information may be identified based on the identification information about the mobile communication device 8 received from the mobile communication device 8 in the movable object 6 and the device information 48.

The weather information provider 4B includes a provider storage 55, a provider control unit 56, and a provider temporary storage 57. The weather information provider 4B may be a computer including a CPU, a ROM, and a RAM.

The provider storage 55 stores wide-area weather information 58. The wide-area weather information 58 may be nationwide weather information. The wide-area weather information 58 may include weather information assigned to each mesh zone of a predetermined size. The mesh zones are formed by partitioning a wide area into many parts.

The provider control unit 56 executes a provision control program 59 stored in the provider storage 55 to control each unit included in the weather information provider 4B. The provider control unit 56 functions as, for example, a communication processing unit 61 and a first weather information generator 62.

The communication processing unit 61 receives position information about the movable object 6 and range information from the weather information processor 4A. The communication processing unit 61 transmits first weather information generated by the first weather information generator 62 to the weather information processor 4A.

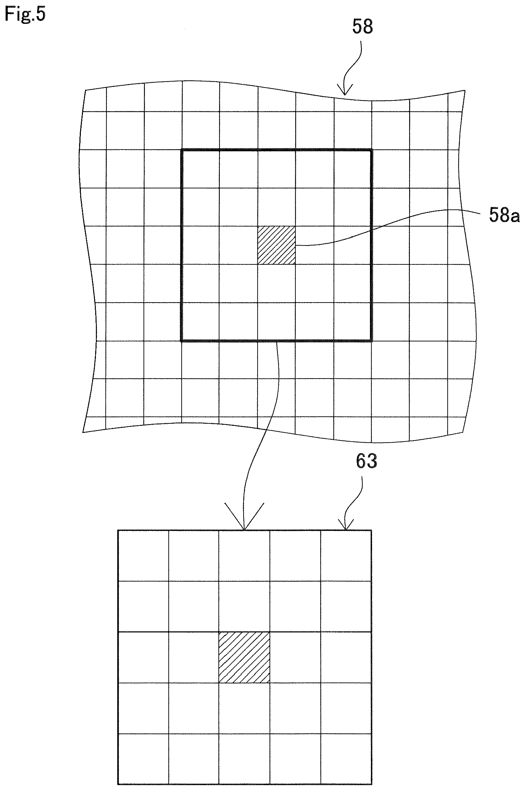

The first weather information generator 62 generates first weather information corresponding to a predetermined range based on the position information about the movable object 6 and the range information. In the present embodiment, the first weather information generator 62, as shown in Fig. 5, generates first weather information 63 by extracting the information from the wide-area weather information 58. For example, the first weather information 63 has, at its center, a current-position mesh zone 58a including the current position of the movable object 6. The range of the first weather information 63 is specified by the range information. For example, when the range specified by the range information is 5 km square, and one mesh zone is 1 km square, as shown in Fig. 5, the generated first weather information 63 is weather information associated with 25 mesh zones including the central current-position mesh zone 58a and its surrounding areas. The first weather information 63 may have a current-position mesh zone 58a including the current position of the movable object 6 and shifted from the center based on sensor information about the movable object 6. For example, the range of the first weather information 63 may be defined to have a current-position mesh zone 58a including the current position of the movable object 6 and shifted rearward in the traveling direction of the movable object 6. The range of the first weather information 63 may not only be a square but also be a rectangular with the long sides in the traveling direction of the movable object 6.

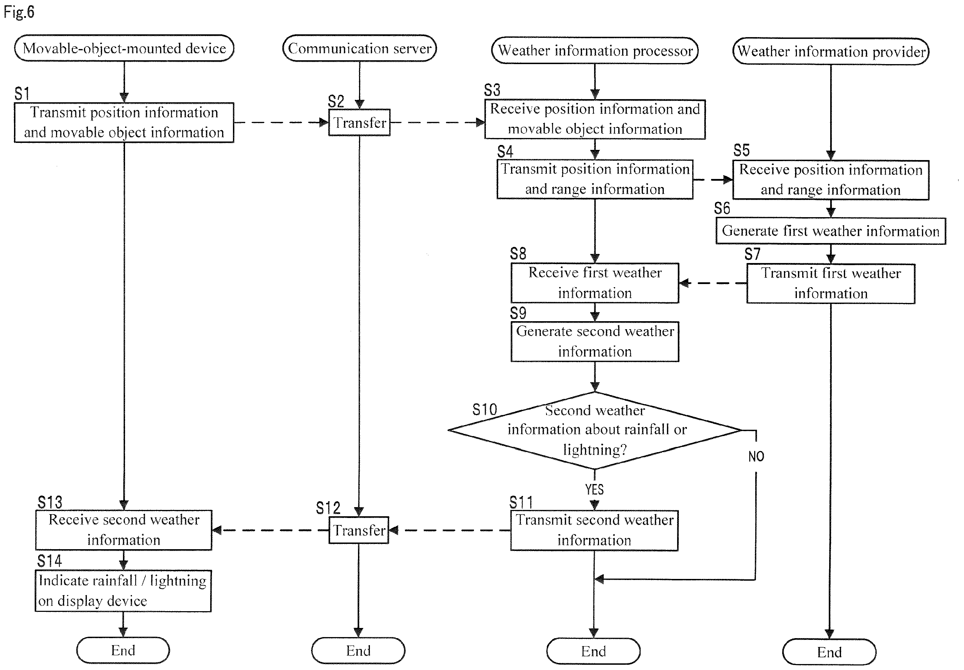

The procedure of processing information in the weather information providing system 1 will now be described with reference to a flowchart shown in Fig. 6.

The communication control unit 36a in the mobile communication device 8 causes the communicator 32 to transmit transmission information to the communication server 3. When the use determination unit 36d determines that the movable object 6 is in use, the transmission information is transmitted at first time intervals. When the use determination unit 36d determines that the movable object 6 is not in use, the transmission information is transmitted at second time intervals (step 1). The second time intervals are longer than the first time intervals. The transmission information includes position information about the movable object 6 and movable object information about the movable object 6. The communication control unit 36a may use transmission information including, for example, position information obtained by the position obtaining unit 34 immediately before the transmission information is transmitted. Hereafter, each step is abbreviated as S.

The communication server 3 receives the transmission information from the mobile communication device 8 via the base station 41. The communication server 3 transmits the received transmission information to the weather information processor 4A (S2). The weather information processing unit 47 in the weather information processor 4A receives the transmission information from the communication server 3 (S3).

After receiving the transmission information, the weather information processing unit 47 determines the range of weather information to request from the weather information provider 4B. The weather information processing unit 47 transmits range information specifying the determined range of weather information and the position information about the movable object 6 to the weather information provider 4B (S4). The communication processing unit 61 in the weather information provider 4B receives the range information and the position information about the movable object 6 from the weather information processor 4A (S5).

After the communication processing unit 61 receives the range information and the position information about the movable object 6, the first weather information generator 62 in the weather information provider 4B generates first weather information based on the range information and the position information about the movable object 6 (S6). In the present embodiment, the first weather information 63 is weather information associated with a plurality of mesh zones within a predetermined range.

The communication processing unit 61 in the weather information provider 4B transmits the first weather information 63 generated by the first weather information generator 62 to the weather information processor 4A (S7). The weather information processing unit 47 in the weather information processor 4A receives the first weather information from the weather information provider 4B (S8).

After the weather information processing unit 47 in the weather information processor 4A receives the first weather information, the second weather information generator 51 generates second weather information based on the first weather information (S9). In an example, when rainfall is detected in one or more of the mesh zones included in the first weather information 63, the second weather information generator 51 generates rainfall information indicating rainfall as the second weather information. In another example, when at least a predetermined amount of rainfall is detected in a predetermined one of the mesh zones included in the first weather information 63, the second weather information generator 51 may generate rainfall information indicating rainfall as the second weather information. In still another example, when lightning is detected in one or more of the mesh zones included in the first weather information 63, the second weather information generator 51 generates lightning information indicating lightning as the second weather information. The second weather information does not include location information indicating a location. In still another example, when rainfall is detected in one or more of the mesh zones and lightning is detected in one or more of the mesh zones included in the first weather information 63, the second weather information generator 51 generates rainfall information and lightning information as the second weather information. In still another example, when neither rainfall nor lightning is detected in the mesh zones included in the first weather information 63, the second weather information generator 51 generates information indicating the absence of rainfall and lightning as the second weather information. The second weather information generator 51 may generate information other than rainfall information and lightning information as the second weather information. In an example, when a tornado is detected in a predetermined one of the mesh zones included in the first weather information 63, the second weather information generator 51 may generate tornado information indicating the tornado as the second weather information in addition to rainfall information and lightning information. In still another example, when none of rainfall, lightning, and a tornado is detected in the mesh zones included in the first weather information 63, the second weather information generator 51 may generate information indicating the absence of rainfall, lightning, and a tornado as the second weather information.

When the second weather information generated by the second weather information generator 51 includes rainfall information or lightning information (Yes in S10), the weather information processing unit 47 transmits the second weather information to the communication server 3 (S11). The communication server 3 transmits the second weather information received from the weather information processor 4A to the mobile communication device 8 (S12). The communicator 32 in the mobile communication device 8 receives the second weather information from the communication server 3 (S13). Under the LPWA communication protocol, the establishment of a downlink between the communicator 32 in the mobile communication device 8 and the communication server 3 may involve the transmission of a downlink instruction to the communication server 3 beforehand. In this case, the weather information processing unit 47 transmits the downlink instruction to the communication server 3 together with the second weather information. In some examples, the weather information processing unit 47 transmits the downlink instruction to the communication server 3 before transmitting the second weather information. In the LPWA communication protocol, the establishment of a downlink between the communicator 32 in the mobile communication device 8 and the communication server 3 may involve the transmission of downlink request information to request a downlink from the communicator 32 to the communication server 3 beforehand. In this case, the communicator 32 may use transmission information including the downlink request information to be transmitted to the communication server 3. For example, after the communicator 32 transmits the transmission information, the downlink is established in a few seconds as defined in the LPWA communication protocol.

In contrast, when the second weather information generated by the second weather information generator 51 does not include rainfall information or lightning information (No in S10), the weather information processing unit 47 ends the process without transmitting information to the communication server 3.

When the second weather information received by the communicator 32 from the communication server 3 includes rainfall information, the communication control unit 36a in the mobile communication device 8 transmits a first display instruction to the meter control unit 26 in the meter unit 7. In response to the first display instruction, the meter control unit 26 causes the display device 17 to provide a display using the rainfall display data. For example, the display device 17 displays the umbrella symbol 17a as shown in Fig. 3 (S14).

When the second weather information includes lightning information, the communication control unit 36a in the mobile communication device 8 transmits a second display instruction to the meter control unit 26 in the meter unit 7. In response to receipt of the second display instruction, the meter control unit 26 causes the display device 17 to provide a display using the lightning display data. For example, the display device 17 displays the lightning symbol 17b as shown in Fig. 3 (S14). The notification about rainfall and lightning is not limited to using the umbrella symbol 17a and the lightning symbol 17b on the display device 17. For example, the meter unit 7 may have a light-emitting diode (LED) indicator for indicating rainfall and another LED indicator for indicating lightning. Each LED indicator may be illuminated instead of the umbrella symbol 17a or the lightning symbol 17b being displayed on the display device 17. For notification about rainfall or a thunderstorm, the display device 17 may display a particular background design on its entire display area.

### Other Embodiments

In S4, the weather information processing unit 47 may not use transmission information including range information to be transmitted to the weather information provider 4B. In this case, the first weather information generator 62 transmits first weather information corresponding to a relatively wide area to the weather information processor 4A. Then, the second weather information generator 51 in the weather information processor 4A generates weather information associated with a plurality of mesh zones within a predetermined range around the current-position mesh zone 58a shown in Fig. 5 based on any one or more of the position information about the movable object 6, the motor displacement or rated output of the movable object 6, the traveling speed of the movable object 6, and the area congestion information 49. The second weather information generator 51 then generates second weather information based on the weather information associated with the mesh zones within the predetermined range. For example, when rainfall is detected in one or more of the mesh zones within the predetermined range, the second weather information generator 51 generates rainfall information indicating rainfall as the second weather information. When lightning is detected in one or more of the mesh zones within the predetermined range, the second weather information generator 51 generates lightning information indicating lightning as the second weather information.

In the present embodiment, although the weather information processor 4A and the weather information provider 4B are separate computers that transmit information to each other through a network, the weather information processor 4A and the weather information provider 4B may be a single computer.

In the present embodiment, when generating second weather information based on first weather information, the second weather information generator 51 may also use the traveling direction of the movable object 6 as a determination factor.

Each step or each function in the above embodiment may be implemented by a single apparatus or a single system through centralized processing or by a plurality of apparatuses or a plurality of systems through distributed processing. Each component in the embodiment may be dedicated hardware. Software-implementable components in the embodiment may be implemented by executing the programs.

The components in the above embodiment may be implemented by the CPU executing the software programs recorded in a recording medium. The programs may be executed after being downloaded from a server or being read from a predetermined recording medium. The programs may be executed by one or more computers. In other words, the weather information providing system 1 according to the embodiment may perform centralized processing or distributed processing.

Although the weather information providing system 1 for providing weather information to a user has been described as an example area information providing system for providing area information to a user, the area information provided to a user is not limited to weather information. For example, the area information providing system may provide disaster information as area information. Examples of the disaster information include flood information and tsunami information.

For the area information providing system not limited to the weather information providing system 1, the weather information is replaceable with area information, the weather information server 4 is replaceable with an area information server 4, the weather information processor 4A is replaceable with an area information processor 4A, the weather information provider 4B is replaceable with an area information provider 4B, the weather information processing unit 47 is replaceable with an area information processing unit 47, the first weather information generator 62 is replaceable with a first area information generator 62, the second weather information generator 51 is replaceable with a second weather information generator 51, a weather information communication unit 52 is replaceable with an area information communication unit 52, the wide-area weather information 58 is replaceable with wider area information 58, and the first weather information 63 is replaceable with first area information 63.

The present invention may be embodied in various other forms without departing from the scope of the present invention as defined in the claims. The embodiments described above are merely illustrative in all respects and should not be construed to be restrictive.

### REFERENCE SIGNS LIST

- 1: weather information providing system (area information providing system)
- 2: movable-object-mounted device
- 3: communication server
- 4: weather information server (area information server)
- 4A: weather information processor (area information processor)
- 4B: weather information provider (area information provider)
- 6: movable object
- 8: mobile communication device
- 17: display device
- 32: communicator
- 34: position obtaining unit
- 36: device control unit
- 36a: communication control unit
- 36d: use determination unit
- 47: weather information processing unit (area information processing unit)
- 48: device information
- 49: area congestion information
- 51: second weather information generator (second area information generator)
- 52: weather information communication unit (area information communication unit)
- 58: wide-area weather information (wider area information)
- 61: communication processing unit
- 62: first weather information generator (first area information generator)
- 63: first weather information (first area information)

## Claims

1. A weather information providing system (1), comprising:
a mobile communication device (8) mountable on a movable object (6);
a communication server (3) configured to transmit and receive information to and from the mobile communication device through wireless communication; and
a weather information server (4) configured to transmit and receive information to and from the mobile communication device through the communication server,
the mobile communication device including a position obtaining unit (34), a communicator (32) and a communication control unit (36a),
the position obtaining unit (34) being configured to obtain position information about a position of the movable object,
the communicator (32) being configured to communicate with the communication server,
wherein the communicator is configured to communicate with the communication server up to a predetermined number of times per day and up to a predetermined communication volume of data per time through a low-power wide-area (LPWA) communication,
the communication control unit being configured to cause
the communicator to transmit transmission information including the position information to the communication server, and
the communicator to receive weather information transmitted from the communication server, and
the weather information server includes a first weather information generator (62), a second weather information generator (51) and a weather information processing unit (47),
the first weather information generator (62) being configured to generate, based on the position information received from the mobile communication device through the communication server, first weather information corresponding to a predetermined range,
the second weather information generator (51) being configured to generate second weather information based on the first weather information, the second weather information including rainfall information indicating rainfall or lightning information indicating lightning, wherein the rainfall information does not include location information indicating a location at which rain is falling and the lightning information does not include location information indicating a location at which lightning has struck, and
the weather information processing unit (47) being configured to transmit the second weather information to the mobile communication device through the communication server, wherein a volume of data of the second weather information is less than a volume of data of the first weather information.

2. The weather information providing system according to claim 1, wherein
the first weather information is weather information associated with a plurality of mesh zones within the predetermined range.

3. The weather information providing system according to claim 1 or claim 2, wherein
the weather information server includes a weather information processor (4A) and a weather information provider (4B),
the weather information processor includes the second weather information generator and the weather information processing unit,
the weather information processing unit transmits the position information received from the communicator to the weather information provider through the communication server, and
the weather information provider includes the first weather information generator and a communication processing unit (61) configured to transmit the first weather information generated by the first weather information generator to the weather information processor.

4. The weather information providing system according to any one of claims 1 to 3,
wherein
the mobile communication device further includes a use determination unit (36d) configured to determine whether the movable object is in use, and
the communication control unit causes the communicator to transmit the transmission information to the communication server at first time intervals when the use determination unit determines that the movable object is in use, and at second time intervals longer than the first time intervals when the use determination unit determines that the movable object is not in use.

5. The weather information providing system according to claim 3, wherein
the weather information processing unit transmits range information specifying the range of the first weather information to the weather information provider in addition to the position information, and
the first weather information generator generates the first weather information corresponding to the range specified by the range information.

6. The weather information providing system according to claim 5, wherein
the weather information processing unit, based on the position information about the movable object and at least one selected from the group consisting of motor displacement or rated output of the movable object, a traveling speed of the movable object, and weather congestion information, sets the range of the first weather information specified by the range information.

7. The weather information providing system according to claim 1, further comprising:
a display device (17) mountable on the movable object and connected to the mobile communication device to communicate with the mobile communication device,
wherein the communication control unit in the mobile communication device is configured to transmit a predetermined first display instruction to the display device in response to weather information indicating rainfall from the weather information server being received by the communicator, and
the display device provides a predetermined first display in response to the first display instruction from the communication control unit.

8. The weather information providing system according to claim 7, further comprising:
a display device mountable on the movable object and connected to the mobile communication device to communicate with the mobile communication device,
wherein the communication control unit in the mobile communication device transmits a predetermined second display instruction to the display device in response to weather information indicating lightning from the weather information server, and
the display device provides a predetermined second display in response to the second display instruction from the communication control unit.

## Patentansprüche

1. System zur Bereitstellung von Wetterinformationen (1), aufweisend:
eine Mobilkommunikationsvorrichtung (8), die an einem bewegbaren Objekt (6) angebracht werden kann;
einen Kommunikationsserver (3), welcher derart konfiguriert ist, dass er Informationen über Drahtloskommunikation an die Mobilkommunikationsvorrichtung überträgt und von dieser empfängt; und
einen Wetterinformationsserver (4), der derart konfiguriert ist, dass er Informationen über den Kommunikationsserver an die Mobilkommunikationsvorrichtung überträgt und von dieser empfängt,
wobei die Mobilkommunikationsvorrichtung eine Positionserlangungseinheit (34), eine Kommunikationseinrichtung (32) und eine Kommunikationssteuereinheit (36a) aufweist,
wobei die Positionserlangungseinheit (34) derart konfiguriert ist, dass sie Positionsinformationen über eine Position des bewegbaren Objekts erlangt,
wobei die Kommunikationseinrichtung (32) derart konfiguriert ist, dass sie mit dem Kommunikationsserver kommuniziert,
wobei die Kommunikationseinrichtung derart konfiguriert ist, dass sie mit dem Kommunikationsserver bis zu einer vorbestimmten Anzahl von Malen pro Tag und bis zu einem vorbestimmten Kommunikationsdatenvolumen pro Mal über Low Power Wide Area Network (LPWA) Kommunikation kommuniziert,
wobei die Kommunikationssteuereinheit derart konfiguriert ist, dass sie bewirkt:
dass die Kommunikationseinrichtung Übertragungsinformationen, welche die Positionsinformationen enthalten, an den Kommunikationsserver überträgt, und
dass die Kommunikationseinrichtung Wetterinformationen empfängt, die von dem Kommunikationsserver übertragen werden, und
der Wetterinformationsserver einen ersten Wetterinformationsgenerator (62), einen zweiten Wetterinformationsgenerator (51) und eine Wetterinformations-Verarbeitungseinheit (47) aufweist,
der erste Wetterinformationsgenerator (62) derart konfiguriert ist, dass er auf Grundlage der von der Mobilkommunikationsvorrichtung über den Kommunikationsserver empfangenen Positionsinformationen erste Wetterinformationen erzeugt, die einem vorbestimmten Bereich entsprechen,
der zweite Wetterinformationsgenerator (51) derart konfiguriert ist, dass er zweite Wetterinformationen auf Grundlage der ersten Wetterinformationen erzeugt, wobei die zweiten Wetterinformationen Niederschlagsinformationen, die Niederschlag angeben, oder Blitzinformationen, die Blitze angeben, umfassen, wobei die Niederschlagsinformationen keine Ortsinformationen umfassen, die einen Ort angeben, an dem Regen fällt, und die Blitzinformationen keine Ortsinformationen umfassen, die einen Ort angeben, an dem ein Blitz eingeschlagen hat, und
die Wetterinformations-Verarbeitungseinheit (47) derart konfiguriert ist, dass sie die zweiten Wetterinformationen über den Kommunikationsserver an die Mobilkommunikationsvorrichtung überträgt, wobei ein Datenvolumen der zweiten Wetterinformationen kleiner ist als ein Datenvolumen der ersten Wetterinformationen.

2. System zur Bereitstellung von Wetterinformationen nach Anspruch 1, wobei
die ersten Wetterinformationen Wetterinformationen sind, die einer Vielzahl von Netzzonen innerhalb des vorbestimmten Bereichs zugeordnet ist.

3. System zur Bereitstellung von Wetterinformationen nach Anspruch 1 oder 2, wobei der Wetterinformationsserver einen Wetterinformationsprozessor (4A) und einen Wetterinformationsanbieter (4B) aufweist,
der Wetterinformationsprozessor den zweiten Wetterinformationsgenerator und die Wetterinformations-Verarbeitungseinheit aufweist,
die Wetterinformations-Verarbeitungseinheit die von der Kommunikationseinrichtung empfangenen Positionsinformationen über den Kommunikationsserver an den Wetterinformationsanbieter überträgt, und
der Wetterinformationsanbieter den ersten Wetterinformationsgenerator und eine Kommunikationsverarbeitungseinheit (61) aufweist, die derart konfiguriert ist, dass sie die von dem ersten Wetterinformationsgenerator erzeugten ersten Wetterinformationen an den Wetterinformationsprozessor überträgt.

4. System zur Bereitstellung von Wetterinformationen nach einem der Ansprüche 1 bis 3, wobei
die Mobilkommunikationsvorrichtung ferner eine Nutzungsbestimmungseinheit (36d) aufweist, die derart konfiguriert ist, dass sie bestimmt, ob das bewegbare Objekt gerade in Gebrauch ist, und
die Kommunikationssteuereinheit die Kommunikationseinrichtung veranlasst, die Übertragungsinformationen an den Kommunikationsserver in ersten Zeitintervallen zu übertragen, wenn die Nutzungsbestimmungseinheit bestimmt, dass das bewegbare Objekt in Gebrauch ist, und in zweiten Zeitintervallen zu übertragen, die länger als die ersten Zeitintervalle sind, wenn die Nutzungsbestimmungseinheit bestimmt, dass das bewegbare Objekt nicht in Gebrauch ist.

5. System zur Bereitstellung von Wetterinformationen nach Anspruch 3, wobei
die Wetterinformations-Verarbeitungseinheit zusätzlich zu den Positionsinformationen Bereichsinformationen, die den Bereich der ersten Wetterinformationen spezifizieren, an den Wetterinformationsanbieter überträgt, und
der erste Wetterinformationsgenerator die ersten Wetterinformationen erzeugt, die dem durch die Bereichsinformationen spezifizierten Bereich entsprechen.

6. System zur Bereitstellung von Wetterinformationen nach Anspruch 5, wobei
die Wetterinformations-Verarbeitungseinheit den Bereich der ersten Wetterinformationen, der durch die Bereichsinformationen spezifiziert wird, auf Grundlage der Positionsinformationen über das bewegbare Objekt und zumindest einem ausgewählt aus der Gruppe bestehend aus Motorhubraum oder Nennleistung des bewegbaren Objekts, einer Bewegungsgeschwindigkeit des bewegbaren Objekts und Wettersättigungsinformationen festlegt.

7. System zur Bereitstellung von Wetterinformationen nach Anspruch 1, ferner aufweisend:
eine Anzeigevorrichtung (17), die an dem bewegbaren Objekt angebracht werden kann und mit der Mobilkommunikationsvorrichtung verbunden wird, um mit der Mobilkommunikationsvorrichtung zu kommunizieren,
wobei die Kommunikationssteuereinheit in der Mobilkommunikationsvorrichtung derart konfiguriert ist, dass sie einen ersten vorbestimmten Anzeigebefehl an die Anzeigevorrichtung als Reaktion darauf überträgt, dass Wetterinformationen, die Niederschlag angeben, von dem Wetterinformationsserver von der Kommunikationseinrichtung empfangen werden, und
die Anzeigevorrichtung eine vorbestimmte erste Anzeige als Reaktion auf den ersten Anzeigebefehl von der Kommunikationssteuereinheit bereitstellt.

8. System zur Bereitstellung von Wetterinformationen nach Anspruch 7, ferner aufweisend:
eine Anzeigevorrichtung, die an dem bewegbaren Objekt angebracht werden kann und mit der Mobilkommunikationsvorrichtung verbunden wird, um mit der Mobilkommunikationsvorrichtung zu kommunizieren,
wobei die Kommunikationssteuereinheit in der Mobilkommunikationsvorrichtung einen zweiten vorbestimmten Anzeigebefehl an die Anzeigevorrichtung als Reaktion auf Wetterinformationen, die einen Blitzeinschlag angeben, von dem Wetterinformationsserver, überträgt, und
die Anzeigevorrichtung eine vorbestimmte zweite Anzeige als Reaktion auf den zweiten Anzeigebefehl von der Kommunikationssteuereinheit bereitstellt.

## Revendications

1. Système de fourniture d'informations météorologiques (1) comprenant :
un dispositif de communication mobile (8) pouvant être monté sur un objet mobile (6) ;
un serveur de communication (3) configuré pour transmettre à et recevoir du dispositif de communication mobile des informations par l'intermédiaire d'une communication sans fil ; et
un serveur d'informations météorologiques (4) configuré pour transmettre à et recevoir du dispositif de communication mobile des informations par l'intermédiaire du serveur de communication,
le dispositif de communication mobile comportant une unité d'obtention de position (34), un dispositif communicateur (32) et une unité de commande de communication (36a),
l'unité d'obtention de position (34) étant configurée pour obtenir des informations de position concernant une position de l'objet mobile,
le dispositif communicateur (32) étant configuré pour communiquer avec le serveur de communication,
dans lequel le dispositif communicateur est configuré pour communiquer avec le serveur de communication jusqu'à un nombre prédéterminé de fois par jour et jusqu'à un volume de données de communication prédéterminé par temps par une communication par réseau étendu à basse consommation (Low Power Wide Area Network ; LPWA),
l'unité de commande de communication étant configurée pour amener
le dispositif communicateur à transmettre des informations de transmission comportant les informations de position au serveur de communication, et
le dispositif communicateur à recevoir des informations météorologiques transmises depuis le serveur de communication, et
le serveur d'informations météorologiques comporte un premier générateur d'informations météorologiques (62), un deuxième générateur d'informations météorologiques (51) et une unité de traitement d'informations météorologiques (47),
le premier générateur d'informations météorologiques (62) étant configuré pour générer, sur la base des informations de position reçues du dispositif de communication mobile par l'intermédiaire du serveur de communication, des premières informations météorologiques correspondant à une plage prédéterminée,
le deuxième générateur d'informations météorologiques (51) étant configuré pour générer des deuxièmes informations météorologiques sur la base des premières informations météorologiques, les deuxièmes informations météorologiques comportant des informations de précipitations indiquant les précipitations ou des informations de foudre indiquant la foudre, dans lequel les informations de précipitations ne comportent pas des informations de localisation indiquant une localisation où la pluie tombe et les informations de foudre ne comportent pas des informations de localisation indiquant une localisation où la foudre a frappé, et
l'unité de traitement d'informations météorologiques (47) étant configurée pour transmettre les deuxièmes informations météorologiques au dispositif de communication mobile par l'intermédiaire du serveur de communication, dans lequel un volume de données des deuxièmes informations météorologiques est inférieur à un volume de données des premières informations météorologiques.

2. Système de fourniture d'informations météorologiques selon la revendication 1, dans lequel
les premières informations météorologiques sont des informations météorologiques associées à une pluralité de zones de maillage dans la plage prédéterminée.

3. Système de fourniture d'informations météorologiques selon la revendication 1 ou la revendication 2, dans lequel le serveur d'informations météorologiques comporte un processeur d'informations météorologiques (4A) et un fournisseur d'informations météorologiques (4B),
le processeur d'informations météorologiques comporte le deuxième générateur d'informations météorologiques et l'unité de traitement d'informations météorologiques,
l'unité de traitement d'informations météorologiques transmet les informations de position reçues du dispositif communicateur au fournisseur d'informations météorologiques par l'intermédiaire du serveur de communication, et
le fournisseur d'informations météorologiques comporte le premier générateur d'informations météorologiques et une unité de traitement de communication (61) configurée pour transmettre les premières informations météorologiques générées par le premier générateur d'informations météorologiques au processeur d'informations météorologiques.

4. Système de fourniture d'informations météorologiques selon l'une quelconque des revendications 1 à 3, dans lequel
le dispositif de communication mobile comporte en outre une unité de détermination d'utilisation (36d) configurée pour déterminer si l'objet mobile est en cours d'utilisation, et
l'unité de commande de communication amène le dispositif communicateur à transmettre les informations de transmission au serveur de communication à des premiers intervalles de temps lorsque l'unité de détermination d'utilisation détermine que l'objet mobile est en cours d'utilisation, et à des deuxièmes intervalles de temps plus longs que les premiers intervalles de temps lorsque l'unité de détermination d'utilisation détermine que l'objet mobile n'est pas en cours d'utilisation.

5. Système de fourniture d'informations météorologiques selon la revendication 3, dans lequel
l'unité de traitement d'informations météorologiques transmet des informations de plage spécifiant la plage des premières informations météorologiques au fournisseur d'informations météorologiques en plus des informations de position, et
le premier générateur d'informations météorologiques génère les premières informations météorologiques correspondant à la plage spécifiée par les informations de plage.

6. Système de fourniture d'informations météorologiques selon la revendication 5, dans lequel
l'unité de traitement d'informations météorologiques définit la plage des premières informations météorologiques spécifiées par les informations de plage sur la base des informations de position concernant l'objet mobile et d'au moins une information sélectionnée dans le groupe constitué du déplacement du moteur ou de la sortie nominale de l'objet mobile, d'une vitesse de déplacement de l'objet mobile, et des informations météorologiques de saturation.

7. Système de fourniture d'informations météorologiques selon la revendication 1, comprenant en outre :
un dispositif d'affichage (17) pouvant être monté sur l'objet mobile et connecté au dispositif de communication mobile pour communiquer avec le dispositif de communication mobile,
dans lequel l'unité de commande de communication dans le dispositif de communication mobile est configuré pour transmettre une première instruction d'affichage prédéterminée au dispositif d'affichage en réponse à des informations météorologiques indiquant des précipitations provenant du serveur d'informations météorologiques reçues par le dispositif communicateur, et
le dispositif d'affichage fournit un premier affichage prédéterminé en réponse à la première instruction d'affichage provenant de l'unité de commande de communication.

8. Système de fourniture d'informations météorologiques selon la revendication 7, comprenant en outre :
un dispositif d'affichage pouvant être monté sur l'objet mobile et connecté au dispositif de communication mobile pour communiquer avec le dispositif de communication mobile,
dans lequel l'unité de commande de communication dans le dispositif de communication mobile transmet une deuxième instruction d'affichage prédéterminée au dispositif d'affichage en réponse à des informations météorologiques indiquant la foudre provenant du serveur d'informations météorologiques, et
le dispositif d'affichage fournit un deuxième affichage prédéterminé en réponse à la deuxième instruction d'affichage provenant de l'unité de commande de communication.
